# FASCICULE DE BREVET EUROPEEN

(11) **EP 1 123 619 B1**
(45) Date de publication et mention de la délivrance du brevet: **30.09.2009**
(21) Numéro de dépôt: 99947561.9
(22) Date de dépôt: 13.10.1999
(51) Int. Cl.: H04N 1/10

(54) **DISPOSITIF DE NUMERISATION A HAUTE RESOLUTION DE DOCUMENTS DE GRANDES DIMENSIONS**
ANORDNUNG ZUR HOCHAUFLÖSENDEN ABTASTUNG GROSSER BILDFORMATE
HIGH RESOLUTION DEVICE FOR DIGITIZING LARGE SIZE DOCUMENTS

(30) Priorité: 23.10.1998 FR 9813291
(43) Date de publication de la demande: 16.08.2001
(73) Titulaire: Lumiere Technology (Societe Anonyme), F-75015 Paris (FR)
(72) Inventeur: COTTE, Pascal, F-77310 Tilly (FR); DUPOUY ,Marcel, F-75012 Paris (FR)
(74) Mandataire: Dupuis-Latour, Dominique
(86) Numéro de dépôt international: PCT/FR1999/002472
(87) Numéro de publication internationale: WO 2000/025509

(56) Documents cités:
- US-A- 4 256 959
- US-A- 4 422 100
- US-A- 4 459 618
- US-A- 4 667 255
- US-A- 4 910 601
- US-A- 5 625 183

## Description

La présente invention concerne la numérisation à très haute résolution de documents de grande dimension (ou d'objets plats présentant un faible relief), en vue de leur stockage numérique informatique pour archivage, consultation, reproduction, diffusion ou traitement ultérieurs.

Jusqu'à présent, la numérisation des plans papier de grande dimension était opérée par des scanneurs de plans, mais ceux-ci présentent plusieurs limitations et inconvénients:
- tout d'abord, la taille maximale du document susceptible d'être scanné, qui est limitée au format normalisé A0 (840 x 1288 mm) pour les plus gros appareils disponibles,
- ensuite la durée du scannage, qui est de l'ordre de dnq minutes pour un document A0, durée prohibitive lorsqu'il s'agit de numériser de fonds documentaires importants, typiquement de plusieurs milliers ou dizaines de milliers de plans papier.

Une solution pour la numérisation de documents de taille supérieure au format A0 consiste à photographier le document au moyen d'une chambre grand format et numériser l'image argentique ainsi obtenue par un numériseur de photographies.

Cette solution permet certes de pallier l'inconvénient de la limite dimensionnelle, mais elle se révèle peu pratique à mettre en oeuvre et très onéreuse, avec en outre un temps de manipulation importent.

L'invention a pour but de pallier ces divers inconvénients en proposant un dispositif de numérisation de documents qui, à la fois:
- accepte des documents de très grande dimension, notablement supérieure à A0 (on verra que ron peut aisément atteindre des dimensions de 2000 x 3334 mm),
- procure une très haute résolution de l'image numérisée, typiquement de l'ordre de 0,1 mm sur le document à reproduire,
- soit très rapide à mettre en oeuvre (typiquement quelques secondes, au plus quelques dizaines de secondes par document), et
- délivre une information directement numérisée et utilisable par un dispositif informatique, sans passer par un support argentique ou intermédiaire équivalent, et
- puisse produire des documents au choix en niveaux de gris, en trait avec une résolution accrue, ou en couleurs.

L'invention est ainsi particulièrement appropriée à la numérisation de fonds documentaires de documents papier à la fois de grande ou très grande dimension et en très grand nombre avec une très haute résolution, tels que des fonds documentaires cartographiques anciens dont on souhaite réaliser une version numérisée.

Par ailleurs, à l'inverse des scanneurs de plans qui sont limités à la reproduction de documents papier et en bon état (pour permettre un entraînement correct du document), l'invention est applicable à la reproduction de documents papier en mauvais état, retouchés, corrigés, réparés, ou encore à la reproduction de documents épais ou d'objets plats présentant un faible relief, ou de documents ou objets fragiles, dans la mesure où la reproduction, comme on le verra, s'effectue sans contact physique avec le document ou objet à reproduire.

Pour atteindre ces buts, il est nécessaire de vaincre des difficultés liées à la fois à la très haute résolution exigée et à la grande dimension des documents concernés pouvant atteindre, comme indiqué plus haut, un format de 3 x 4 m, voire même davantage.

En particulier, une résolution élevée exige un éclairage important du document ou de l'objet à numériser si l'on veut obtenir la qualité souhaitée dans un temps raisonnable.

Si l'on éclaire uniformément la surface à reproduire avec un flux correspondant, de l'ordre de 200 000 lux, on va se trouver confronté à un certain nombre d'inconvénients tels que :
- faible contraste du fait de l'éblouissement de l'optique et de la chambre de reproduction par le flux lumineux,
- consommation d'énergie importante, de l'ordre de 50 kW, avec corrélativement la nécessité de climatiser le local de travail compte tenu de l'échauffement considérable,
- difficulté d'obtenir une bonne uniformité de l'éclairage sur le plan de travail, et nécessité de multiplier à cet effet le nombre des sources lumineuses, d'où un ensemble relativement encombrant.

Les documents US-A-4 910 601, US-A-4 256 959 et US-A-4 459 618 décrivent des appareils de numérisation de documents où une fine bande lumineuse balaye le document et un système de miroirs motorisés forme une image de la zone éclairée sur un capteur fixe.

Le document US-A-4 667 255 décrit un appareil de numérisation d'images avec un équipage mobile situé derrière un objectif de prise de vues, et portant à la fois un capteur linéaire et une source lumineuse déplacés concurremment par le mouvement de l'équipage mobile. Cet éclairage "through-the-lens" (TTL) de l'objet est de ce fait mécaniquement centré sur la zone analysée par le capteur à un instant donné.

Ces dispositifs connus ne permettent cependant pas de numériser correctement, et avec une résolution élevée, des documents de très grande dimension et susceptibles de présenter des qualités d'aspect très variées. Il est également essentiel de disposer d'un éclairage parfaitement uniforme sur toute l'étendue du document.

Le préambule de la revendication 1 correspond à la structure générale divulguée par le US-A-4 667 255 précité, et la partie caractérisante en expose les éléments propres à l'invention qui permettent d'obtenir le résultat recherché.

Cette technique présente un certain nombre d'avantages tels que :
- amélioration du contraste (et donc de la résolution finale) du fait de la suppression de l'éblouissement de l'optique et de l'ensemble du dispositif par un flux lumineux correspondant à des zones hors de la ligne en cours d'analyse,
- économie d'énergie, typiquement dans un rapport de dix à cinquante environ par rapport à un éclairement de l'ensemble du document,
- suppression de la nécessité de climatiser le local de travail, du fait de la moindre puissance consommée,
- plus grande facilité pour obtenir une bonne uniformité de l'éclairage sur le plan de travail,
- encombrement réduit par rapport aux éclairages traditionnels.

On va maintenant décrire un exemple de mise en oeuvre de l'invention, en référence aux dessins annexés.
La figure 1 est une vue d'ensemble d'un dispositif selon l'invention, qui en montre les différents éléments.
La figure 2 est une vue schématique en élévation, montrant le principe de fonctionnement de l'invention.
Les figures 3 et 4 sont des vues perspective, respectivement de trois-quarts arrière et avant, d'une partie du réflecteur elliptique et de la source lumineuse, montrant la formation du faisceau.
La figure 5 est une vue en plan présentant la configuration des divers éléments du système optique utilisé par l'invention.

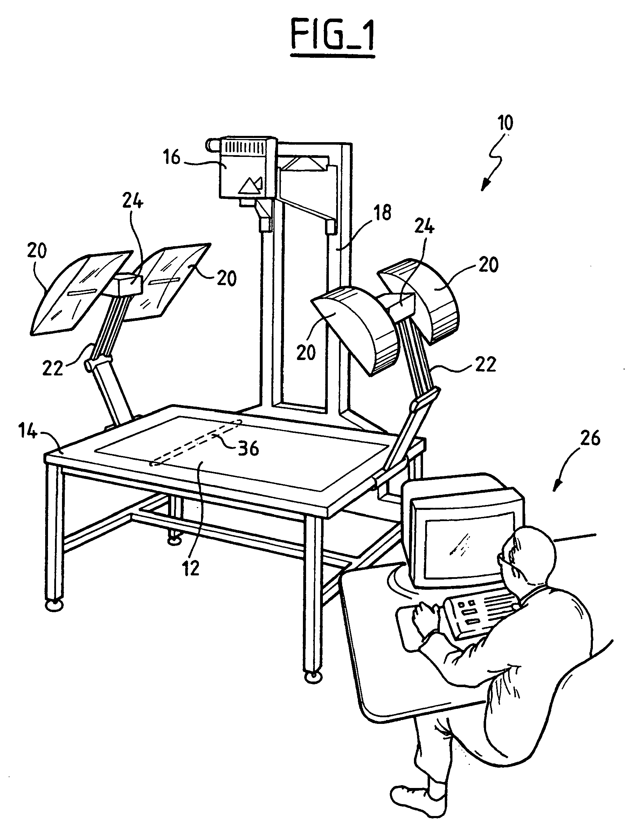

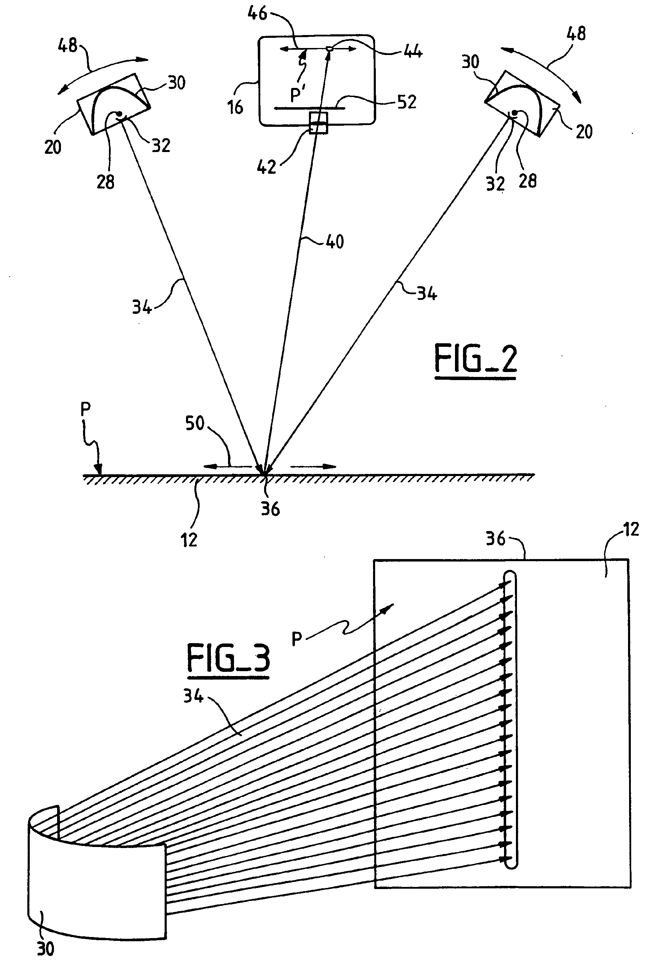

Sur les figures 1 et 2, on a représenté les divers éléments constituant le dispositif de l'invention.

Ce dispositif 10 est destiné à reproduire un document (ou, de façon générale, un objet plat présentant un faible relief) référencé 12 qui, dans cette configuration, est posé sur une table 14 surmontée par un appareil de prise de vue 16 monté sur un bâti 18. Des générateurs de lumière 20 que l'on décrira plus en détail ci-dessous (ici au nombre de quatre) sont disposés de part et d'autre du document 12 et sont fixés à la table 14 par des bras 22 et des liaisons articulées et motorisées 24.

L'ensemble est piloté par une station de travail informatique 26 qui assure le contrôle coordonné des différents éléments et la récupération des données numérisées.

La configuration illustrée figure 1, qui est celle correspondant typiquement à un banc de reproduction, n'est pas limitative et peut être adaptée en fonction de la dimension et de la nature des documents à reproduire.

Ainsi, pour des documents de très grande dimension, il est possible de suspendre au plafond la chambre 16 et les générateurs de lumière 20 (pour reproduire des documents posés sur une table dont le format est de l'ordre de 3 x 4 m, la distance entre plan objet et plan image est de l'ordre de 4 m). Pour assurer la planéité du document, il est en outre souhaitable d'utiliser une table aspirante.

Une autre solution encore consiste, au lieu de poser le document à l'horizontale, à suspendre celui-ci verticalement. La chambre 16 est alors placée sur un trépied et les générateurs de lumière motorisés 20 s'étendent verticalement de part et d'autre de l'ensemble. Pour assurer le maintien en place du document et sa planéité, il est vivement souhaitable d'utiliser, ici encore, un plateau aspirant (vertical).

Dans le mode de réalisation préférentiel, les générateurs de lumière 20 comprennent, comme illustré figures 2 à 5, une source lumineuse linéaire 28, par exemple le filament d'une ampoule tubulaire. Cette source est associée à un réflecteur 30 en forme de portion de cylindre elliptique dont la directrice est parallèle au filament linéaire de la source 28 et dont la génératrice est une ellipse dont l'un des foyers est situé sur le filament linéaire de la source 28. Avantageusement, il est prévu une coupelle frontale 32 en forme de portion de cylindre de révolution, destinée à rabattre vers le réflecteur 30 les rayons qui auraient échappé au miroir principal et les rediriger vers ce dernier, afin d'augmenter le rendement du système.

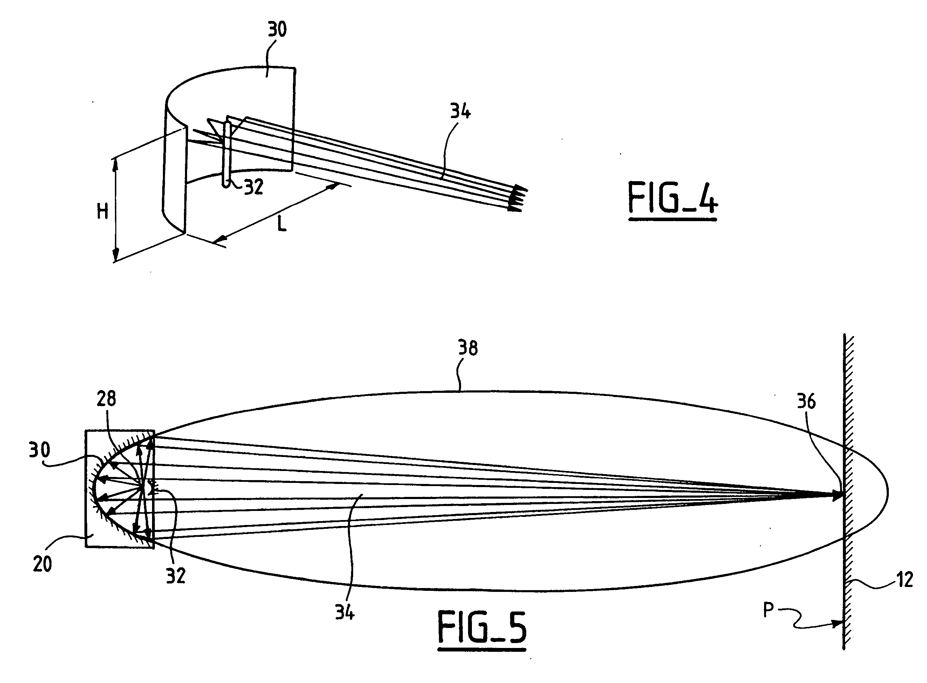

Le générateur de lumière 20 produit un faisceau lumineux 34 produisant, sur le plan P (plan objet sur lequel est posé le document 12 à reproduire) une étroite bande lumineuse rectiligne 36, la position du plan P étant choisie pour se trouver à l'autre foyer de l'ellipse 38 (figure 5). La forme elliptique du réflecteur 30 provoque ainsi la concentration des rayons lumineux issus de l'un des foyers (la source lumineuse 28) sur l'autre foyer (la bande lumineuse 36) située sur le plan à éclairer P.

Le miroir étant formé d'une portion de cylindre elliptique, il ne présente aucune courbure parallèlement à la direction de la génératrice, de sorte qu'aucune focalisation ne se produit selon cet axe et le résultat est donc une fine ligne lumineuse sur le plan du document à saisir.

Pour obtenir une fine ligne éclairée, il est nécessaire d'avoir au foyer de l'ellipse une source lumineuse 28 ponctuelle ou, au moins, filiforme, associée à une optique elliptique de qualité. On peut utiliser divers types de lampes fournissant un tel domine émissif ponctuel ou filiforme, telles que des lampes halogène, xénon, etc. Les lampes au xénon ont un domaine émissif extrêmement réduit, mais elles sont d'un emploi délicat et, surtout assez onéreuses compte tenu de l'appareillage nécessaire. En revanche, les lampes halogène à filament linéaire sont beaucoup plus faciles à utiliser et bénéficient d'une plus grande diffusion du fait de leurs applications grand public. Leur filament est spiralé ou bispiralé, de sorte que le diamètre effectif lumineux est de l'ordre de 2 mm, ce qui, compte tenu de l'optique utilisée décrite ci-dessus, produit sur le plan objet une bande lumineuse de 5 à 8 an de large.

Il est certes avantageux, pour pouvoir rattraper les écarts de suivi, de disposer d'une largeur de bande lumineuse notablement supérieure à la largeur de la ligne analysée par l'appareil de prise de vue.

Mais en pratique, on constate qu'une largeur de l'ordre de 1 an est toutefois largement suffisante, ce qui peut être obtenu avec des lampes halogènes spéciales dont le filament n'est plus spiralé, mais constitué d'un simple fil de tungstène d'un diamètre de 0,1 à 0,5 mm, tendu sur une longueur appropriée, typiquement de 5 à 15 cm. On peut ainsi obtenir à l'endroit de la ligne d'analyse et de part et d'autre de celle-ci la même luminosité qu'avec une lampe à filament spiralé ou bispiralé, mais avec une consommation électrique très inférieure, réduite d'un rapport de 4 à 10, voire plus.

Le générateur de lumière 20 ainsi constitué se présente comme un bloc parallélépipédique dont l'une des grandes faces est tournée vers la surface à éclairer.

Typiquement, les dimensions H (hauteur) et L (largeur d'ouverture) du réflecteur 30 sont telles que L > H, typiquement avec des valeurs de l'ordre de L = 15 à 60 cm et H = 10 à 20 cm.

Pour permettre une illumination plus uniforme de la surface de travail sur toute son étendue, on utilise de préférence plusieurs de ces générateurs de lumière, par exemple deux groupes de deux projecteurs, comme illustré.

La chambre d'analyse 16 placée au-dessus du document 12 reçoit les rayons lumineux 40 correspondant à la bande éclairée 36, et forme au moyen d'un objectif approprié 42 une image du plan objet P sur un plan image P'. Ce plan image P' est analysé par un capteur photosensible DTC (Dispositif à Transfert de Charges ou CCD, *Charge-Coupled Device*) 44 en forme de barrette disposée parallèlement à l'axe central de la bande illuminée 36 et homothétiquement à cette dernière. Pour obtenir la résolution souhaitée, on peut par exemple utiliser une barrette comportant 12000 pixels.

Le capteur photosensible 44, qui analyse une ligne du plan image P', fait l'objet d'un balayage régulier dans une direction perpendiculaire à la direction de la barrette, lui permettant de couvrir la totalité du plan image. Ce balayage, schématisé par les flèches 46, est par exemple opéré par un moteur pas-à-pas de grande précision, typiquement un moteur contrôlé à 50800 pas/tour avec transmission par vis à bille avec précontrainte et rattrapage de jeu. Cette technique permet d'obtenir une précision mécanique de 1 µm, parfaitement compatible avec la précision nécessaire pour obtenir la résolution souhaitée, de l'ordre de 6 µm, sur le plan image P' (correspondant à environ 0,1 mm sur le plan objet P pour un document 1300 x 2167 mm).

Le déplacement du capteur photosensible 44 sur le plan image P' est synchronisé avec le déplacement de la bande lumineuse 36 sur le plan objet P. Le déplacement de cette bande lumineuse est opéré par une motorisation des générateurs de lumière 20, schématisée par les flèches 48 sur la figure 2.

Pour assurer automatiquement la concordance entre la bande lumineuse 36 et la ligne effectivement analysée par le capteur photosensible 44. L'invention utilise un asservissement electronique, la position du capteur étant connue à tout moment par le logiciel de pilotage du moteur, cette information est utilisée comme base de calcul pour piloter les moteurs d'orientation des générateurs de lumière.

On obtient ainsi un déplacement, schématisé par les flèches 50, de la bande lumineuse 36, déplacement synchronisé sur celui, symbolisé par les flèches 46, du capteur 44.

On notera que, ramenée sur le document à saisir, la ligne d'analyse (correspondant à la largeur, perpendiculairement à la direction de la barrette, d'un pixel du capteur 44) est extrêmement fine. La poursuite d'une telle ligne d'analyse par le dispositif d'éclairage serait très difficile si la bande lumineuse 36 était trop étroite. Cependant, sauf à utiliser des réflecteurs de très grande dimension, la largeur de la bande lumineuse reste de l'ordre de quelques centimètres, c'est-à-dire des dizaines de fois supérieure à ce qui serait strictement nécessaire. Dans le cas présent ceci est un avantage, même si une plus grande concentration permettrait d'économiser de la puissance lumineuse : en effet, le suivi, qui exige alors une moins grande précision, est facilité ; de plus, une zone plus large étant éclairée, des défauts de planéité du document sont sans conséquence, ce qui permet même de saisir des objets de type bas-relief.

Pour permettre l'acquisition d'une image en couleurs, on peut prévoir d'insérer un filtre 52 à l'intérieur de la chambre 16, dans le trajet du rayon lumineux, en réitérant le balayage trois fois pour une saisie en trichromie YMC (jaune, magenta, cyan) ou RVB (rouge, vert, bleu), le filtre étant changé entre chaque balayage, le tout de manière automatique sous le contrôle du logiciel de pilotage. Le nombre de passages peut être augmenté si une analyse plus fine des couleurs s'avère utile ou nécessaire, par exemple six passages successifs avec insertion des filtres R, V, B, Y, M et C, dans cet ordre ou dans un ordre différent, pour une analyse en hexachromie.

## Revendications

1. Un dispositif (10) de numérisation de documents, comprenant :
- un support plan (14) définissant un plan objet (P) et apte à recevoir un document (12) ;
- une chambre d'analyse (16) située à distance du document, comprenant un objectif (42) formant une image du document sur un plan image (P') de la chambre d'analyse (16), et un capteur photosensible mobile (44) analysant une ligne d'image selon une première direction,
- la chambre comportant des premiers moyens moteurs, aptes à déplacer (46) de manière contrôlée le capteur selon une seconde direction, distincte de la première, de manière à balayer la surface du plan image selon cette seconde direction, et aptes à délivrer une information de position instantanée du capteur mobile sur le plan image
- des moyens d'éclairage, aptes à former sur le support plan une étroite bande lumineuse (36) orientée parallèlement à ladite première direction, cette bande étant déplacée de façon contrôlée de manière à balayer la surface du support plan parallèlement à ladite seconde direction de façon synchronisée sur le déplacement du capteur mobile,
une homothétie étant maintenue entre, d'une part, la ligne d'analyse du capteur mobile sur le plan image et, d'autre part, la bande lumineuse sur le plan objet,
dispositif **caractérisé en ce que :**
- les moyens d'éclairage comportent deux projecteurs (50), ou deux groupes de projecteurs (50), disposés de part et d'autre dudit support plan, dans une configuration adaptable en fonction de la dimension et de la nature des documents à numériser.
- chacun des projecteurs est un projecteur motorise orientable comprenant des seconds moyens moteurs, distincts desdits premiers moyens moteurs, ces seconds moyens moteurs étant aptes à contrôler l'orientation du projecteur respectif de manière que la bande lumineuse produite par les deux projecteurs, ou groupes de projecteurs, balaye la surface du plan objet parallèlement à ladite seconde direction,
- le dispositif comporte en outre des moyens de synchronisation aptes à asservir les seconds moyens moteurs sur les premiers moyens moteurs, ces moyens de synchronisation étant des moyens électroniques de poursuite de la ligne d'analyse par la bande lumineuse comprenant des moyens pour :
utiliser ladite information de position comme base de calcul pour commander de manière correspondante lesdits seconds moyens moteurs des projecteurs respectifs en fonction de cette information de position, en maintenant ladite homothétie entre, d'une part, la ligne d'analyse du capteur mobile sur le plan image et, d'autre part, la bande lumineuse sur le plan objet.

2. Le dispositif de la revendication 1, dans lequel chacun des projecteurs (20) comporte une source lumineuse linéaire (28) et un réflecteur (30) en forme de portion de cylindre elliptique, ce cylindre étant défini par une directrice parallèle à la source lumineuse linéaire et une génératrice elliptique dont un foyer est situé sur la source lumineuse linéaire et l'autre foyer est situé sur le plan objet.

## Claims

1. A document scanning apparatus (10), including:
- a planar support (14) defining an object plane (P) and adapted to receive a document (12);
- an analysis camera (16) located at a distance from the document, including a lens (42) forming an image of the document on an image plane (P') of the analysis camera (16), and a movable photosensitive sensor (44) analysing a line of the image plane in a first direction;
- the camera including first motor means, adapted to move (46) the sensor in controlled manner in a second direction, that is distinct from the first one, so as to scan the surface of the image plane along said second direction, and adapted to provide information about the instantaneous position of the movable sensor on the image plane;
- lighting means, adapted to produce on the planar support a narrow strip of light (36) oriented parallel to said first direction, said strip being moved in a controlled manner so as to scan the surface of the planar support parallel to said second direction synchronously with the movement of the movable sensor,
an homothety being kept between, on the one hand, the analysis line of the movable sensor on the image plane and, on the other hand, the strip of light on the object plane,
said device being **characterised in that:**
- the lighting means include two light generators (50), or two groups of light generators (50), placed on either side of said planar support, with an arrangement which pay be adapted as a function of the size and of the nature of the documents to be scanned;
- every light generator is a rotating motorized light generator including second motor means, different from said first motor means, said second motor means being adapted to control the orientation of the respective light generator so that the strip of light produced by the two light generators, or groups of light generators, scans the surface of the object plane parallel to said second direction;
- the apparatus further includes synchronizing means adapted to provide servo-control of the second motor means from the first motor, said synchronizing means being electronic means for tracking the analysis line by the strip of light including means for:
using said position information as a computing basis for correspondingly controlling said second motor means of the respective light generators as a function of this position information, by keeping said homothety between, on the one hand, the analysis line of the movable sensor on the image plane and, on the other hand, the strip of light on the object plane.

2. The apparatus of claim 1, in which each light generator (20) comprises a linear light source (28) and a reflector (30) in the form of a portion of an elliptical cylinder, said cylinder being defined by a director line parallel to the linear light source and by an elliptical generatrix having one of its focuses located at the linear light source and its other focus located on the object plane.

## Patentansprüche

1. Vorrichtung (10) zum Digitalisieren von Dokumenten, aufweisend:
• eine ebene Auflage (14), die eine Objektebene (P) bestimmt und die geeignet ist ein Dokument (12) aufzunehmen;
• eine Analysekammer (16) die abgesetzt vom Dokument angeordnet ist, die ein Objekiv (42) umfasst, das ein Bild des Dokuments auf einer Bildebene (P') der Analysekammer (16) erzeugt, und einen beweglichen photosensiblen Sensor (44) umfasst, der eine Bildzeile in einer ersten Richtung analysiert,
• wobei die Kammer erste Antriebsmittel aufweist, die geeignet sind den Sensor auf kontrollierte Weise in einer zweiten Richtung, die sich von der ersten Richtung unterscheidet, fortzubewegen (46) in der Art, dass die Oberfläche der Bildebene in dieser zweiten Richtung überstrichen wird und die geeignet sind eine momentane Positionsinformation des beweglichen Sensors auf der Bildebene zu liefern,
• Beleuchtungsmittel, die geeignet sind auf der ebenen Auflage einen schmalen, leuchtenden Streifen (36) zu erzeugen, der parallel zu der ersten Richtung orientiert ist, wobei dieser Streifen auf kontrollierte Weise fortbewegt wird in der Art, dass die Oberfläche der ebenen Auflage parallel zu der zweiten Richtung auf mit der Fortbewegung des beweglichen Sensors synchronisierte Weise überstrichen wird,
wobei eine Homothetie zwischen der Analysezeile des beweglichen Sensors auf der Bildebene einerseits und dem leuchtenden Streifen auf der Objektebene andererseits beibehalten wird,
**dadurch** charakterisiert, dass:
• die Beleuchtungsmittel zwei Projektoren (50) oder zwei Gruppen an Projektoren (50) aufweisen, die auf der einen und der anderen Seite der ebenen Auflage in einer Konfigurierung angeordnet sind, die entsprechend der Größe und der Art der zu digitalisierenden Dokumente anpassbar ist,
• wobei jeder der Projektoren ein ausrichtbarer, motorisierter Projektor ist, der zweite Antriebsmittel aufweist, die sich von den ersten Antriebsmitteln unterscheiden, wobei die zweiten Antriebsmittel geeignet sind, die Ausrichtung des entsprechenden Projektors in der Art zu steuern, dass der von den zwei Projektoren oder Gruppen an Projektoren erzeugte leuchtende Streifen die Oberfläche der Objektebene parallel zu der zweiten Richtung überstreicht,
• die Vorrichtung umfasst außerdem Synchronisationsmittel, die geeignet sind, die zweiten Antriebsmittel gemäß den ersten Antriebsmitteln zu regeln, wobei die Synchronisationsmittel elektronische Mittel zur Verfolgung der Analysezeile über den leuchtenden Streifen sind, die Mittel aufweisen zum:
• Verwenden der Positionsinformation als Berechnungsbasis, um die zweiten Antriebsmittel der entsprechenden Projektoren in Abhängigkeit der Positionsinformation auf entsprechende Weise zu steuern, die Homothetie zwischen der Analysezeile des beweglichen Sensors auf der Bildebene einerseits und dem leuchtenden Streifen auf der Objektebene andererseits beibehaltend.

2. Vorrichtung nach Anspruch 1, in welcher jeder der Projektoren (20) eine lineare Leuchtquelle (28) und einen Reflektor (30) in der Form eines elliptischen Zylinderabschnittes aufweist, wobei dieser Zylinder durch eine zur linearen Leuchtquelle parallele Direktrix und durch eine elliptische Generatrix, deren einer Brennpunkt auf der linearen Leuchtquelle liegt und deren anderer Brennpunkt auf der Objektebene liegt, bestimmt ist.
